# EUROPEAN PATENT SPECIFICATION

(11) **EP 0 602 002 B1**
(45) Date of publication and mention of the grant of the patent: **24.11.1999**
(21) Application number: 94101366.6
(22) Date of filing: 01.03.1990
(51) Int. Cl.: C09D 11/02, B41J 31/00

(54) **Ink ribbon for printer and ink therefor**
Farbband für Drucker, dazu Tinte
Ruban encreur pour imprimante et encre à cet usage

(30) Priority: 06.03.1989 JP 5213389; 13.03.1989 JP 5800489; 17.03.1989 JP 6388289
(43) Date of publication of application: 15.06.1994
(62) Divisional of application: 90302198.8
(73) Proprietor: FUJITSU ISOTEC LIMITED, Inagi-shi, Tokyo 206 (JP)
(72) Inventor: Tanaka, Masayuki, Date-gun, Fukushima 960-06 (JP); Suzawa, Hiromichi, Fukushima-shi, Fukushima 960-01 (JP); Kubota, Masayuki, Date-gun, Fukushima 960-06 (JP); Sekioka, Chiaki, Fukushima 960-04 (JP); Uemura, Hisashi, Fukushima-shi, Fukushima 960-02 (JP)
(74) Representative: Perry, Robert Edward

(56) References cited:
- EP-A- 0 119 275
- EP-A- 0 168 045
- EP-A- 0 229 377
- DATABASE WPIL, no. 85-065 334, DERWENT PUBLICATIONS LTD., London; & JP-A-60-020 975 (PILOT PEN. CO.) 85-02-02
- DATABASE WPIL, no. 87-075 796, DERWENT PUBLICATIONS LTD., London; & JP-A-62-028 283 (GENER K.K.)
- PATENT ABSTRACTS OF JAPAN, unexamined applications, M field, vol. 11, no. 94, March 25, 1987 THE PATENT OFFICE JAPANESE GOVERNMENT page 162 M 574; & JP-A-61-246 083 (OKI ELECTRIC)

## Description

### Field of the Invention

The present invention relates to a black ink to be used for an ink ribbon for a printer such as a wire dot printer.

### Background of the Invention

Impact-type printers such as wire dot printers or daisy wheel printers are widely used. The cloth ink ribbons to be used in such printers usually comprise cotton cloth, silk cloth or nylon cloth as the base cloth, and contain an ink prepared by dissolving or dispersing dyes or colorants in various solvents and coated on or impregnated in the base cloth.

The ink may comprise a soft dye that absorbs in the visible region, at about 400 to less than 700 nm. These colorants do not absorb in the near infrared region (700 to 900 nm), which is the wave-length of most bar codes now in use, and therefore cannot be used for that purpose.

A suitable colorant having an absorption band in the infrared region is typically a hard pigment such as carbon black or a metal oxide such as black titanium oxide. Since the printer wire is impacted through the ink ribbon, it is susceptible to abrasion by the hard pigment. Abrasion of the wire is also caused by adhesion of the ink to the wire and penetration of the hard pigment into the gap between the wire and the wire guide.

The amount of carbon black used as the colorant may be reduced by combination with a black oil-soluble dye. However, this may cause print blurring.

EP-A-0229377 discloses a black ink comprising an oil-soluble dye such as nigrosine and another organic pigment.

JP-A-61426083 discloses an ink ribbon containing an organic pigment, for impact printers.

### Summary of the Invention

A black ink according to the present invention comprises an oil-soluble black dye and at least two non-abrasive organic pigments selected from yellow, orange, red, violet, blue and green organic pigments which, in combination, give a black colour, wherein each organic pigment has a mean particle size of 0.01 to 0.5 µm.

Since two or more soft organic pigments are formulated in combination, in place of the carbon black of the prior art, in the ink for a printer ribbon, the amount of abrasion of the wire can be greatly reduced, and blurring of the print can be prevented, whereby sharp printing can be obtained.

### Description of the Invention

The organic pigments used in this invention are softer than the printer wire (made of a high speed steel or tungsten). They have a mean particle size of 0.5 to 0.01 µm, preferably 0.1 to 0.05 µm. Specific examples of such pigments are shown below. A preferred composition of the organic pigments includes combinations of the colours, yellow, cyan and magenta, but the organic pigments used in the present invention are not limited to these combinations.

Yellow organic pigment: Hanza Yellow, Benzidine Yellow, Vulcan Fast Yellow, Chromophthal Yellow, Lumopgen Yellow, Isoindoline Yellow.

Orange organic pigment: Benzidine Orange, Vulcan Orange, Permanent Orange, Naphthol Orange.

Red organic pigment: Parared, Toluidine Red, Permanent Bold, Brilfast Scarlet, Lake red, Permanent Carmine, Perylene Red.

Violet organic pigment: Quinacridone Violet, Dioxazine Violet, Naphthol Violet.

Blue organic pigment: Victoria Blue, Phthalocyanin Blue, Fast Sky Blue, Cyanicidine Blue.

Green organic pigment: Phthalocyanine Green, Violanthrone Green, Permanent Brown, Perylene Bordeau.

In the black ink of the present invention, as the oil-soluble black dye to be used in combination with the organic pigment as mentioned above, any oil-soluble dye which has been formulated as the ink for a ribbon in the prior art can be formulated. This dye is preferably nigrosine.

In the black ink of the present invention, other than the organic pigments and the oil-soluble dye as mentioned above, any component utilized for this purpose in the prior art can be used. Examples of such components include the above-mentioned mineral oils such as liquid paraffin and various lubricating oils, higher fatty acids, and surfactants.

The composition of the black ink for a printer of the present invention is not particularly limited, but can be formulated preferably at 5 to 25% by weight of the oil-soluble black dye, 5 to 20% by weight of the organic pigments and other optional components such as 10 to 40% by weight of mineral oils, 15 to 35% by weight of higher fatty acids and 5 to 25% by weight of surfactants.

According to the present invention, since the soft organic pigments as described above are formulated in combination in the ink for a printer ink ribbon together with an oil soluble dye, a tone very close to a dark black can be obtained without the formulation of carbon black, and since these organic pigments are soft and have an appropriate degree of oil absorption, the problems of an abrasion of the wire or print blurring are solved.

The following Examples 1 and 2 illustrate the invention.

### Examples 1 and 2 and Comparative Example

Two black inks having the formulations shown in Table 1 were formulated and were impregnated in a 6,6-nylon base cloth. In addition, in a Comparative Example, a low abrasion ink of the prior art was used.

A printing test was carried out, using a 24-pin dot-impact printer DPK-24EH manufactured by Fujitsu Co., Ltd. When pins with the highest frequency of use reached 10⁸ and 2x10⁸ printings of a standard pattern, the abrasion of all pins was measured. In particular, other than abrasion of the wire tip ends, the armature of the bin base is also abraded, whereby the pin height is reduced.

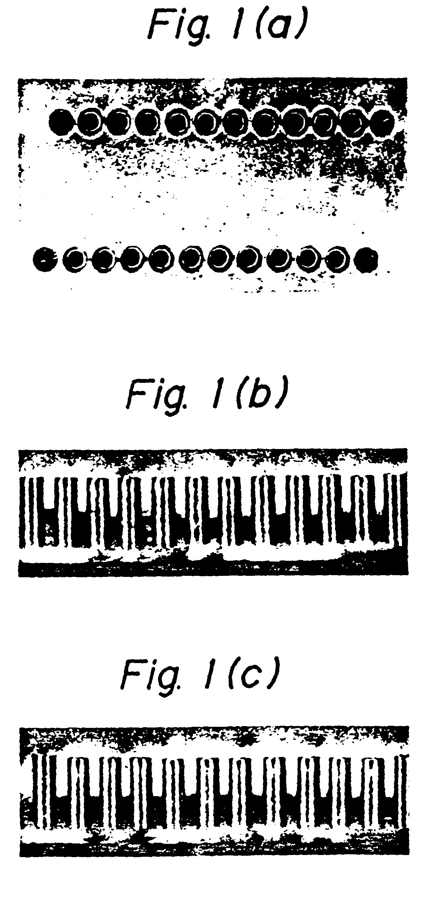

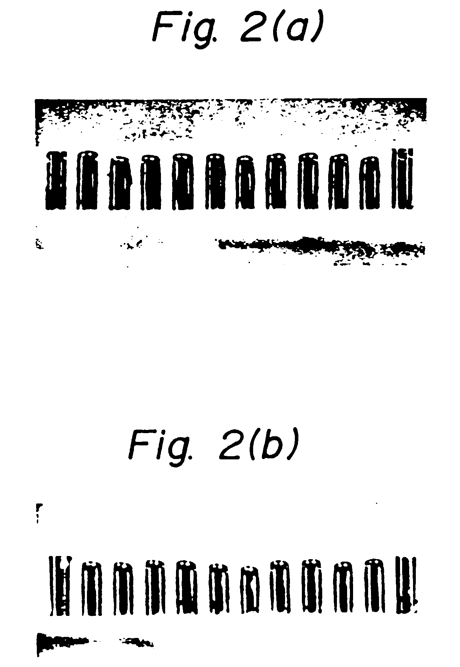

The results are shown in Table 2, and in Figs. 1 and 2. In particular:
Figures 1(a), (b) and (c) are photographs illustrating the abraded conditions of the pins after 2x10⁸ printings, for Example 1; and
Figs. 2(a) and (b) are photographs illustrating the abraded conditions of the pins after 2x10⁸ printings, for the Comparative Example; and

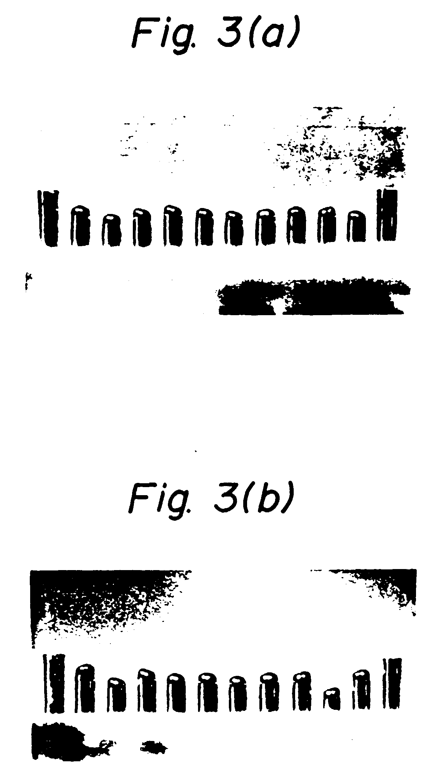

Figs. 3(a) and (b) are photographs illustrating the abraded conditions of the pins after 2x10⁸ printings, when carbon black is formulated.

**Table 1**

| | (parts by weight) | | |
|---|---|---|---|
| Composition | Example 1 | Example 2 | Comparative Example |
| Pigment (carbon) | 0 | 0 | 5 |
| " (Organic pigment*¹) | 5 | 10 | - |
| " (Aniline black) | 5 | 0 | 5 |
| Dye (nigrosine) | 20 | 15 | 20 |
| Mineral oil (fluid paraffin) | 30 | 30 | 30 |
| Fatty acid (oleic acid) | 20 | 25 | 20 |
| Surfactant (nonionic) | 20 | 20 | 20 |

| | | | |
|---|---|---|---|
| *1: Seika Fast Yellow 2015 (Hanza Brilliant Yellow) (4 parts)/Seika Carmine 6B/478 (Carmine 6B) (3 parts) Chromofine Blue 4927 (Phthalocyanine Blue) (5 parts) (all produced by Dainichi Seika K.K.) | | | |

The ink of the Examples gave a sharp printing equal to the ink of the Comparative Example, and no blurring of the print was observed.

**Table 2**

| | 10⁸ printings | | 2x10⁸ printings | |
|---|---|---|---|---|
| Ink | Abraded amount range | Average value | Abraded amount range | Average value |
| | (µm) | (µm) | (µm) | (µm) |
| Example 1 | 0 - 11.5 | 5.4*¹ | 0 - 13 | 5.1*¹ |
| Example 2 | 0 - 9.5 | 5.1 *¹ | 0 - 12 | 5.3 *¹ |
| Comparative Example | 1 - 26 | 14.1 | 10 - 48 | 28.05 |

| | | | | |
|---|---|---|---|---|
| *1: Practically due to abrasion (collapse) of armature, the tip end of the wire pin was not substantially abraded. | | | | |

The amount abraded in the case of the ink formulated with carbon black only is about 80 µm (one hundred million printing), and about 160 µm (two hundred million printing).

## Claims

1. A black ink comprising an oil-soluble black dye and at least two non-abrasive organic pigments selected from yellow, orange, red, violet, blue and green organic pigments which, in combination, give a black colour, wherein each organic pigment has a mean particle size of 0.01 to 0.5 µm.

2. A black ink as claimed in claim 1, wherein the oil-soluble black dye is nigrosine.

3. A black ink as claimed in claim 1 or claim 2, which comprises 5 to 25% by weight of the oil-soluble black dye, 5 to 20% by weight of the organic pigments, 10 to 40% by weight of a mineral oil, 15 to 35% by weight of a higher fatty acid, and 5 to 25% by weight of a surfactant.

4. A printing ribbon comprising a black ink as claimed in any preceding claim.

5. Use of a ribbon as claimed in claim 4, in a printer.

## Patentansprüche

1. Schwarze Tinte mit einem öllöslichen schwarzen Farbstoff und wenigstens zwei nichtreibenden (non-abrasive) organischen Pigmenten, die ausgewählt sind aus gelben, orangefarbenen, roten, violetten, blauen und grünen organischen Pigmenten, die in Kombination eine schwarze Farbe ergeben, bei der jedes organisches Pigment eine mittlere Partikelgröße von 0,01 bis 0,5 µm hat.

2. Schwarze Tinte nach Anspruch 1, bei der der öllösliche schwarze Farbstoff Nigrosin ist.

3. Schwarze Tinte nach Anspruch 1 oder Anspruch 2, die 5 bis 25 Gew.-% des öllöslichen schwarzen Farbstoffes umfaßt, 5 bis 20 Gew.-% der organischen Pigmente, 10 bis 40 Gew.-% eines Mineralöls, 15 bis 35 Gew.-% einer höheren Fettsäure und 5 bis 25 Gew.-% einer oberflächenaktiven Substanz.

4. Druckband mit einer schwarzen Tinte nach irgendeinem vorhergehenden Anspruch.

5. Verwendung eines Bandes nach Anspruch 4 in einem Drucker.

## Revendications

1. Encre noire comprenant un colorant noir soluble dans l'huile et au moins deux pigments organiques non abrasifs choisis parmi les pigments organiques jaunes, oranges, rouges, violets, bleus et verts qui, en combinaison, donnent une couleur noire, où chaque pigment organique a une taille moyenne de particules de 0,01 à 0,5 µm.

2. Encre noire selon la revendication 1, dans laquelle le colorant noir soluble dans l'huile est la nigrosine.

3. Encre noire selon la revendication 1 ou la revendication 2 qui comprend 5 à 25 % en masse du colorant noir soluble dans l'huile, 5 à 20 % en masse des pigments organiques, 10 à 40 % en masse d'une huile minérale, 15 à 35 % en masse d'un acide gras supérieur et 5 à 25 % en masse d'un tensioactif.

4. Ruban d'imprimante comprenant une encre noire selon l'une quelconque des revendications précédentes.

5. Utilisation d'un ruban selon la revendication 4 dans une imprimante.
